# EUROPÄISCHE PATENTSCHRIFT

(11) **EP 2 207 343 B1**
(45) Veröffentlichungstag und Bekanntmachung des Hinweises auf die Patenterteilung: **23.11.2016**
(21) Anmeldenummer: 09014994.9
(22) Anmeldetag: 03.12.2009
(51) Int. Cl.: H04N 5/335

(54) **Bildsensor**
Image sensor
Capteur d'images

(30) Priorität: 09.01.2009 DE 102009004187
(43) Veröffentlichungstag der Anmeldung: 14.07.2010
(73) Patentinhaber: ARNOLD & RICHTER CINE TECHNIK GMBH & CO. BETRIEBS KG, 80799 München (DE)
(72) Erfinder: Cieslinski, Michael, 85521 Ottobrunn (DE)
(74) Vertreter: Manitz, Finsterwald & Partner GbR

(56) Entgegenhaltungen:
- WO-A2-02/37830
- JP-A- 2006 352 804

## Beschreibung

Die vorliegende Erfindung betrifft einen Bildsensor für elektronische Kameras, insbesondere digitale Kinokameras, mit einer Vielzahl von lichtempfindlichen Pixeln zur Erzeugung wenigstens eines belichtungsproportionalen Signals.

Bekannte elektronische Kameras verwenden typischerweise einen Bildsensor in CMOS- oder CCD-Technologie, der eine Vielzahl von insbesondere in Zeilen und Spalten angeordneten lichtempfindlichen Elementen - sogenannte Pixel - umfasst, die durch ein Objektiv der Kamera fallendes Licht in elektrische Signale umwandeln. Bei den Signalen kann es sich - insbesondere abhängig von der verwendeten Technologie und/oder der Verarbeitungsstufe auf dem Bildsensor - beispielsweise um Ladungen, Ströme oder Spannungen handeln. Ein jeweiliges Signal ist dabei zu einer durch eine Belichtung gesammelten Ladung des jeweiligen Pixels proportional.

Eine Ausleseschaltung, die üblicherweise am Rand des durch die Pixel gebildeten Bildfelds des Bildsensors angeordnet ist, nimmt die Signale der Pixel zur weiteren Verarbeitung entgegen. Bei der weiteren Verarbeitung werden die Signale der Pixel üblicherweise in elektrische Spannungen konvertiert und anschließend verstärkt. Die verstärkten Signale können dann von einem oder mehreren Ausgängen des Bildsensors analog ausgegeben oder mit einem oder mehreren internen Analog-Digital-Wandlern digitalisiert und digital ausgegeben werden.

Bekannte Bildsensoren besitzen jedoch einen vergleichsweise geringen Dynamikumfang. So besitzen elektronische Kameras nur eine In-Bild-Dynamik von 1:1000, wohingegen ein chemischer Film eine In-Bild-Dynamik von 1:50000 und mehr aufweisen kann.

Um die In-Bild-Dynamik elektronischer Bildsensoren zu erhöhen, ist es bekannt, für jedes Bild mehrere Einzelbilder mit unterschiedlichen Belichtungszeiten aufzunehmen, und die Einzelbilder anschließend zusammenzusetzen. Da die mehreren Einzelbilder dabei nacheinander und damit zu verschiedenen Zeitpunkten aufgenommen werden und dazwischen der Sensor jeweils ausgelesen werden muss, können bei bewegten Motiven räumliche Verfälschungseffekte entstehen. Beispielsweise treten häufig Reflektionen einer Lichtquelle in einem Auge einer Person auf. Aufgrund der Bewegung der Person sowie der unterschiedlichen Aufnahmezeitpunkte verschiebt sich dann die Lage einer derartigen Reflexion und kann im Extremfall sogar außerhalb des Auges liegen. Eine solche Bildstörung ist für einen menschlichen Betrachter sehr irritierend, da die Form von Objekten anhand der Lage derartiger Glanzpunkte geschätzt wird.

Daneben ist es zur Erhöhung des Dynamikumfangs eines Bildsensors auch bekannt, die Pixel mit einer wenigstens einen Verstärker aufweisenden Ausleseschaltung zu koppeln, die dazu ausgelegt ist, das wenigstens eine Signal eines jeweiligen Pixels mit unterschiedlichen Verstärkungsfaktoren zu verstärken, um für das wenigstens eine Signal eines jeweiligen Pixels unterschiedlich verstärkte Signale zu erzeugen. Dies wird im Stand der Technik dadurch erreicht, dass die Ausleseschaltung für ein jeweiliges Pixel, insbesondere für eine jeweilige Spalte, zwei voneinander getrennte Kanäle mit einem jeweiligen Verstärker umfasst, um das wenigstens eine Signal eines jeweiligen Pixels zu verstärken, wobei die beiden, einem jeweiligen Pixel zugeordneten Kanäle unterschiedliche Verstärkungen aufweisen. Einer der beiden Kanäle kann auf eine hohe Aussteuerung optimiert sein. Diese kann beispielsweise durch speziell modifizierte Pixel, insbesondere Pixel mit zuschaltbaren Kapazitäten, wie sie grundsätzlich in US 2005/0052554 A1 beschrieben sind, oder Pixel mit Überlaufkapazitäten, wie sie grundsätzlich in EP 1 681 850 A1 beschrieben sind, erreicht werden. Zusätzlich oder alternativ kann der andere oder einer der beiden Kanäle auf eine hohe Empfindlichkeit bzw. ein niedriges Rauschen optimiert sein. Dies kann beispielsweise durch eine feste Vorverstärkung erreicht werden. In beiden Fällen werden aus einer während eines einzigen Belichtungsvorgangs in einem jeweiligen Pixel erzeugten Ladung mehrere Signale erzeugt, so dass den unterschiedlichen Verstärkungen in den beiden Kanälen bereits verschieden hohe Signale des jeweiligen Pixels, die jedoch auf ein und demselben Ladungssignal basieren, zugrunde liegen. Grundsätzlich ist es aber ausreichend, dass zwei Kanäle mit unterschiedlichen Verstärkungen vorliegen.

Die beiden Kanäle können dann unabhängig voneinander ausgelesen und kombiniert werden, wobei insgesamt ein Bild mit einem höheren Dynamikumfang entsteht.

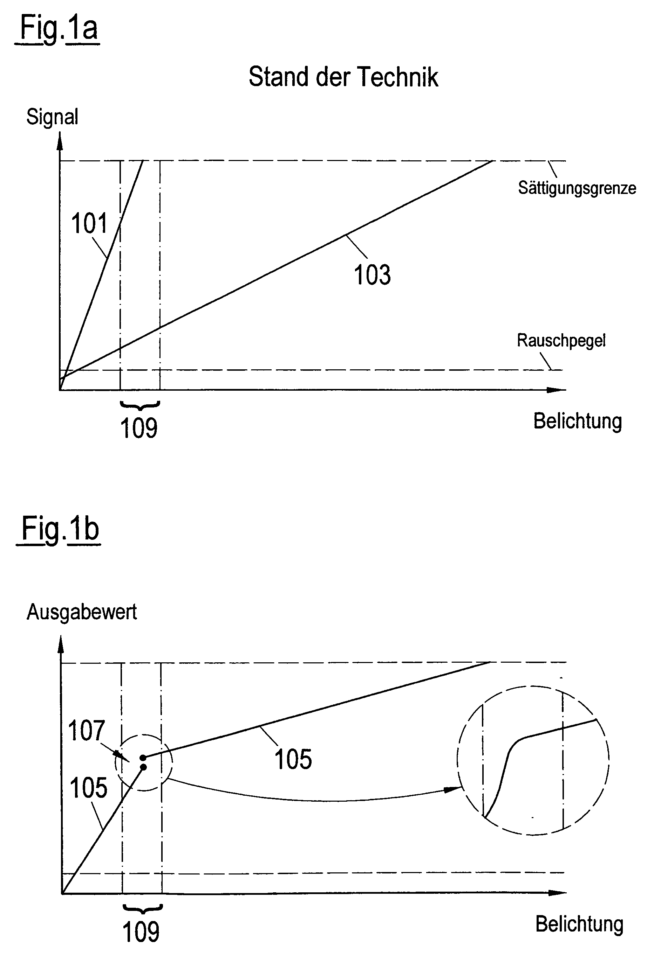

Dies ist in den Fig. 1a und 1b gezeigt. Die Kombination der verstärkten Signale zweier Kanäle, von denen ein Kanal 101 eine hohe Verstärkung und ein Kanal 103 eine geringe Verstärkung besitzt, erfolgt derart, dass bei geringer Belichtung das verstärkte Signal des Kanals 101 mit der hohen Verstärkung und bei hoher Belichtung das verstärkte Signal des Kanals 103 mit der geringen Verstärkung einem Ausgabewert 105 für den den beiden Kanälen 101, 103 zugeordneten jeweiligen Bildpunkt zugrunde gelegt wird. Bevorzugt erfolgt die Kombination der verstärkten Signale nach einer Digitalisierung der verstärkten Signale. Weiter bevorzugt besitzt das jeweilige Pixel und/oder jeder der beiden Kanäle 101, 103 eine zumindest im Wesentlichen lineare Belichtungs-Signal-Kennlinie, wie dies in Fig. 1a gezeigt ist. Sofern die analogen Signale der Pixel nicht linear mit der Belichtung variieren, kann dies über eine entsprechende Kalibrierung bei der Digitalisierung ausgeglichen werden.

Am Übergang zwischen geringer und hoher Belichtung ist ein einfaches Umschalten zwischen den beiden Kanälen 101, 103 in der Regel nicht ausreichend, da aufgrund des herstellungsbedingt meist nicht vermeidbaren Auftretens von Offsetspannungen, Abweichungen von den gewünschten Verstärkungen und/oder Drifts an dem Übergang ein Sprung 107 in der Belichtungs-Ausgabewert-Kennlinie auftreten würde, wie es in Fig. 1b gezeigt ist. In Flächen im Bild mit stetig ansteigender Helligkeit, zum Beispiel bei einem wolkenlosen Himmel, führt dies zu sichtbaren Bildstörungen, falls der Übergang gerade in einer solchen Fläche liegt.

Üblicherweise erfolgt daher in einem Übergangsbereich 109 um den Übergang herum ein Überblenden, durch das sowohl das verstärkte Signal des Kanals 101 mit der hohen Verstärkung als auch das verstärkte Signal des Kanals 103 mit der geringen Verstärkung berücksichtigt wird, wobei die beiden verstärkten Signale derart miteinander verrechnet werden, dass ein sanfter Übergang entsteht, wie dies in der vergrößerten Darstellung des Übergangs in Fig. 1b gezeigt ist.

Um das Rauschen in dem Kanal 101 mit der hohen Verstärkung weiter zu verringern und damit den Dynamikumfang des Bildsensors weiter zu erhöhen, könnte die Verstärkung dieses Kanals weiter angehoben werden, wobei dann aber der Übergang oder Übergangsbereich 109, an dem von dem dort zumindest nahezu voll ausgesteuerten Kanal 101 zu dem dort nur gering ausgesteuerten Kanal 103 umgeschaltet oder überblendet wird, zu noch geringeren Belichtungen verschoben würde. Bei diesen noch geringeren Belichtungen ist die Signalqualität des Kanals 103 mit der geringen Verstärkung jedoch verringert, da dieser Kanal dort nur ein sehr kleines Signal aufweist, welches nur geringfügig über dem Rauschpegel des jeweiligen Pixels liegt. Entsprechend würde die Bildqualität leiden.

Um dieses Problem zu lösen, müsste daher ein dritter Kanal vorgesehen werden, der eine mittlere Verstärkung und im Bereich der vollen Aussteuerung des Kanals 101 mit der hohen Verstärkung eine ausreichend hohe Signalqualität besitzt.

Das Vorsehen eines derartigen dritten Kanals führt jedoch zu einem erheblichen konstruktiven Mehraufwand und höheren Kosten, da damit auch entsprechende Mittel zur Auswertung, Analog-Digital-Wandlung, Kalibrierung und/oder Überblendung des dritten Kanals auf und/oder außerhalb des Bildsensors notwendig werden.

Das Dokument JP 2006 352804A betrifft eine Digitalkamera mit einem Bildsensor, einem Baustein für eine ISO-Einstellung und einem Steuerbaustein. Dabei gibt der Bildsensor Pixelsignale an den ISO-Baustein aus. Die Pixelsignale gehen an einem Eingang des ISO-Bausteins ein und werden nach einer Schwarzwertkorrektur als Signal V1 an eine Multiplikationsschaltung und eine Additionsschaltung weitergeleitet, um ein Signal V3 bzw. ein Signal V4 zu erzeugen. Eine Vergleicherschaltung vergleicht das Signal V1 mit einem Referenzwert und eine Auswahlschaltung schaltet abhängig von dem Ergebnis des Vergleichs entweder das Signal V3 oder das Signal V4 an einen Ausgang durch. Abhängig von der gewählten ISO-Einstellung, die von dem Steuerbaustein vorgegeben wird, können über jeweilige Schalter und mittels eines jeweiligen Verstärkers verschiedene Verstärkungen in der Multiplikationsschaltung bzw. der Additionsschaltung eingestellt werden.

Der Erfindung liegt die Aufgabe zugrunde, einen Bildsensor der eingangs genannten Art anzugeben, der gegenüber bekannten Bildsensoren ein verbessertes Signal/Rausch-Verhältnis bzw. einen erhöhten Dynamikumfang aufweist, ohne einen erheblichen konstruktiven Mehraufwand oder wesentlich höhere Kosten zu verursachen.

Die Aufgabe wird durch einen Bildsensor mit den Merkmalen des Anspruchs 1 gelöst, und insbesondere dadurch, dass für das wenigstens eine Signal eines jeweiligen Pixels wenigstens drei unterschiedliche Verstärkungsfaktoren auswählbar sind, wobei die Ausleseschaltung eine Auswahleinrichtung umfasst, die dazu ausgelegt ist, in Abhängigkeit von der Höhe des wenigstens einen Signals eines jeweiligen Pixels die Zusammensetzung einer Gruppe von Verstärkungsfaktoren auszuwählen, mit denen die Ausgangssignale der Ausleseschaltung verstärkt sind, wobei die Anzahl der Verstärkungsfaktoren der Gruppe der Anzahl der Ausgangssignale entspricht, und wobei die Anzahl der Ausgangssignale für das wenigstens eine Signal eines jeweiligen Pixels wenigstens zwei
beträgt und geringer ist als die Anzahl der auswählbaren Verstärkungsfaktoren. Mit anderen Worten ist die Anzahl der jeweils ausgewählten Verstärkungsfaktoren geringer als die Anzahl der für jede Auswahl zur Verfügung stehenden Verstärkungsfaktoren.

Beispielsweise kann für das wenigstens eine Signal eines jeweiligen Pixels die Erzeugung der unterschiedlich verstärkten Signale zumindest teilweise in voneinander getrennten Kanälen mit einem jeweiligen Verstärker erfolgen, wobei bevorzugt der wenigstens eine Ausgang eine der Anzahl der ausgewählten Verstärkungsfaktoren entsprechende Anzahl an Kanalausgängen umfasst. An den Kanalausgängen der Ausleseschaltung werden daher nicht die verstärkten Signale sämtlicher Kanäle ausgegeben, sondern nur diejenigen verstärkten Signale, die bei der weiteren Verarbeitung, insbesondere für das vorgenannte Überblenden, das üblicherweise außerhalb des Bildsensors stattfindet, auch tatsächlich benötigt werden. Der zusätzliche Aufwand und die zusätzlichen Kosten für die Realisierung eines Bildsensors mit zwei oder mehr als zwei Kanälen mit insgesamt wenigstens drei möglichen, unterschiedlichen Verstärkungen sind daher nur geringfügig höher als bei einem Bildsensor mit genau zwei Kanälen mit insgesamt zwei, unterschiedlichen Verstärkungen.

Gemäß einer Ausführungsform der Erfindung ist die Ausleseschaltung derart ausgelegt, dass das verstärkte Signal zumindest eines der bevorzugt wenigstens drei Kanäle stets an einem der Kanalausgänge als eines der Ausgangssignale ausgegeben wird. Die Ausgabe des jeweiligen Ausgangssignals des jeweiligen Kanals kann dabei stets über denselben Kanalausgang erfolgen.

Die Kanäle können unterschiedliche Empfindlichkeiten und/oder lineare Belichtungs-Signal-Kennlinien besitzen, wie es eingangs zu aus dem Stand der Technik bekannten Bildsensoren erläutert ist.

Daneben ist es jedoch beispielsweise auch möglich, dass für das wenigstens eine Signal eines jeweiligen Pixels die Erzeugung der unterschiedlich verstärkten Signale zumindest teilweise in einem gemeinsamen Kanal mit einem gemeinsamen Verstärker des wenigstens einen Verstärkers erfolgt, wobei der Verstärkungsfaktor des gemeinsamen Verstärkers verstellbar ist, insbesondere umschaltbar. Auch in diesem Fall werden an dem gemeinsamen Kanal der Ausleseschaltung nicht alle möglichen verstärkten Signale ausgegeben, sondern nur diejenigen verstärkten Signale, die bei der weiteren Verarbeitung benötigt werden. Für die Realisierung eines derartigen Bildsensors mit ggf. nur einem einzigen Kanal kann der Aufwand sogar geringer sein als bei dem aus dem Stand der Technik bekannten Bildsensor mit zwei Kanälen.

Insbesondere in diesem Fall kann für das wenigstens eine Signal eines jeweiligen Pixels die Erzeugung der unterschiedlich verstärkten Signale zumindest teilweise nacheinander erfolgen und/oder kann die Ausleseschaltung derart ausgelegt sein, dass für das wenigstens eine Signal eines jeweiligen Pixels die Erzeugung der unterschiedlich verstärkten Signale nur für einen Teil der auswählbaren Verstärkungsfaktoren erfolgt.

Grundsätzlich kann bei einem Bildsensor, der für das wenigstens eine Signal eines jeweiligen Pixels genau zwei Verstärkungsfaktoren aus genau drei auswählbaren Verstärkungsfaktoren auswählt, nämlich aus einem Verstärkungsfaktor mit einer geringen Verstärkung, einem Verstärkungsfaktor mit einer mittleren Verstärkung, und einem Verstärkungsfaktor mit einer hohen Verstärkung, die Ausleseschaltung derart ausgelegt sein, dass der Verstärkungsfaktor mit der mittleren Verstärkung immer ausgewählt wird. Die Ausleseschaltung bestimmt dann lediglich noch, welcher der beiden anderen Verstärkungsfaktoren zusätzlich ausgewählt wird.

Unter dem Merkmal, dass die Auswahleinrichtung dazu ausgelegt ist, in Abhängigkeit von der Höhe des wenigstens einen Signals eines jeweiligen Pixels diejenigen Verstärkungsfaktoren auszuwählen, die denjenigen verstärkten Signalen zugrunde liegen, die an dem wenigstens einen Ausgang der Ausleseschaltung ausgegeben werden, ist folglich auch eine solche Auswahl zu verstehen, bei der für das wenigstens eine Signal eines jeweiligen Pixels ein oder mehrere Verstärkungsfaktoren stets ausgewählt werden, insbesondere ein oder mehrere Kanäle stets an einem jeweiligen der Kanalausgänge ausgegeben werden, insbesondere einem jeweiligen Kanalausgang fest zugeordnet sind. Durch die Auswahleinrichtung wird daher für das wenigstens eine Signal eines jeweiligen Pixels die Zusammensetzung einer Gruppe von Verstärkungsfaktoren ausgewählt, die den verstärkten Signalen zugrunde liegen, die an dem wenigstens einen Ausgang ausgegeben werden, wobei die Anzahl der Verstärkungsfaktoren der Gruppe der Anzahl der Ausgangssignale entspricht. Anders formuliert umfasst das vorgenannte Merkmal auch eine Auswahl, bei der für das wenigstens eine Signal eines jeweiligen Pixels aus lediglich einem Teil der einem jeweiligen Signal zugeordneten Verstärkungsfaktoren ausgewählt werden kann, insbesondere deshalb, da ein Teil der Ausgangssignale bereits durch einen oder mehrere fest zugeordnete, vorausgewählte oder auf sonstige Weise bestimmte Verstärkungsfaktoren festgelegt ist.

Ein besonders kostengünstiger Bildsensor kann insbesondere dann erhalten werden, wenn der Bildsensor mehrere Analog-Digital-Wandler zum Digitalisieren der an dem wenigstens einen Ausgang ausgegebenen Ausgangssignale umfasst, wobei die Auswahleinrichtung Stellmittel, insbesondere Schaltmittel, umfasst, die zwischen dem wenigstens einen Verstärker und den Analog-Digital-Wandlern angeordnet sind, d.h. wenn die Analog-Digital-Wandlung bereits auf dem Bildsensor vorgenommen wird. Die Analog-Digital-Wandlung muss dann nicht für alle Verstärkungsfaktoren vorgenommen werden. Grundsätzlich können die Analog-Digital-Wandler jedoch auch außerhalb des Bildsensors vorgesehen sein. In beiden Fällen umfasst der Bildsensor bevorzugt mehrere Ausgangsverstärker, wobei die Stellmittel zwischen dem wenigstens einen Verstärker und den Ausgangsverstärkern angeordnet sind.

Bevorzugt ist die Auswahleinrichtung dazu ausgelegt, die Auswahl in Abhängigkeit von wenigstens einem Vergleich zwischen wenigstens einem Referenzwert und der Höhe des wenigstens einen Signals des jeweiligen Pixels, insbesondere nach dessen Verstärkung mittels eines des wenigstens eines Verstärkers, vorzunehmen. Beispielsweise kann die Auswahleinrichtung hierfür für jedes Pixel, insbesondere für eine jede Spalte, wenigstens einen Komparator, insbesondere genau einen Komparator, und wenigstens ein Stellmittel, insbesondere einen Schalter, insbesondere genau ein Stellmittel, umfassen.

Bei einem Bildsensor, der für das wenigstens eine Signal eines jeweiligen Pixels genau zwei Verstärkungsfaktoren aus genau drei auswählbaren Verstärkungsfaktoren auswählt, ist es bevorzugt, wenn die Auswahleinrichtung dazu ausgelegt ist, dass das verstärkte Signal, dem der Verstärkungsfaktor mit der vorgenannten mittleren Verstärkung zugrunde liegt, oder das noch unverstärkte Signal mit dem vorgenannten Referenzwert verglichen wird, wobei das verstärkte Signal, dem der Verstärkungsfaktor mit der vorgenannten geringen Verstärkung zugrunde liegt, zusätzlich ausgewählt wird, falls der Vergleich ergibt, dass das verstärkte Signal, dem der Verstärkungsfaktor mit der mittleren Verstärkung zugrunde liegt, oder das noch unverstärkte Signal über dem Referenzwert liegt, und wobei das verstärkte Signal, dem der Verstärkungsfaktor mit der vorgenannten hohen Verstärkung zugrunde liegt, zusätzlich ausgewählt wird, falls der Vergleich ergibt, dass das verstärkte Signal, dem der Verstärkungsfaktor mit der mittleren Verstärkung zugrunde liegt, oder das noch unverstärkte Signal unter dem Referenzwert liegt. Unter dem unverstärkten Signal ist dasjenige Signal zu verstehen, das an der ein- oder mehrkanaligen Verstärkereinrichtung anliegt, die die auswählbaren Verstärkungsfaktoren aufweist.

Alternativ kann die Auswahleinrichtung dazu ausgelegt sein, dass das verstärkte Signal, dem der Verstärkungsfaktor mit der geringen Verstärkung zugrunde liegt, mit dem Referenzwert verglichen wird, wobei das verstärkte Signal, dem der Verstärkungsfaktor mit der mittleren Verstärkung zugrunde liegt, zusätzlich ausgewählt wird, falls der Vergleich ergibt, dass das verstärkte Signal, dem der Verstärkungsfaktor mit der geringen Verstärkung zugrunde liegt, über dem vorgenannten Referenzwert liegt, und wobei das verstärkte Signal, dem der Verstärkungsfaktor mit der hohen Verstärkung zugrunde liegt, zusätzlich ausgewählt wird, falls der Vergleich ergibt, dass das verstärkte Signal, dem der Verstärkungsfaktor mit der geringen Verstärkung zugrunde liegt, unter dem Referenzwert liegt. Der Referenzwert der alternativen Ausführungsform liegt bevorzugt im Bereich der oberen Aussteuerungsgrenze des Kanals mit der hohen Verstärkung. Alternativ hierzu kann allerdings auch das verstärkte Signal, dem der Verstärkungsfaktor mit der hohen Verstärkung zugrunde liegt, mit dem Referenzwert verglichen werden, um analog zu der vorstehend erläuterten Vorgehensweise ein Ausgangssignal auszuwählen.

Bei einem Bildsensor, der für das wenigstens eine Signal eines jeweiligen Pixels genau zwei Verstärkungsfaktoren aus genau drei auswählbaren Verstärkungsfaktoren auswählt, ist in der Regel kein zusätzlicher Ausgang nötig, an dem das Ergebnis der Auswahl der Auswahleinrichtung ausgegeben wird, wenn das verstärkte Signal, dem der Verstärkungsfaktor mit der mittleren Verstärkung zugrunde liegt, stets an demselben Ausgang ausgegeben wird, sofern voneinander getrennte Kanäle vorliegen, oder stets als erstes oder zweites ausgeben wird, sofern ein gemeinsamer Kanal vorliegt. Denn dann kann der Vergleich des verstärkten Signals, dem der Verstärkungsfaktor mit der mittleren Verstärkung zugrunde liegt, mit dem Referenzwert außerhalb des Bildsensors nochmals erfolgen, um zu bestimmen, welcher der beiden anderen Verstärkungsfaktoren zusätzlich ausgewählt worden ist. Bei einem Bildsensor, der beispielsweise genau zwei Kanalausgänge und genau vier Kanäle K1 bis K4 umfasst, wobei die Verstärkung von Kanal K1 zu Kanal K4 hin stetig ansteigt, kann die Auswahleinrichtung dazu ausgebildet sein, entweder die verstärkten Signale der Kanäle K1 und K2, die verstärkten Signale der Kanäle K2 und K3, oder die verstärkten Signale der Kanäle K3 und K4 zur Ausgabe an den beiden Kanalausgängen auszuwählen. In diesem Fall ist es vorteilhaft, das Ergebnis der Auswahl der Auswahleinrichtung der nachfolgenden, insbesondere außerhalb des Bildsensors befindlichen Signalverarbeitung mitzuteilen. Dies gilt auch, wenn ein gemeinsamer Kanal und vier auswählbare Verstärkungsfaktoren vorliegen und zwei Ausgangssignale nacheinander ausgegeben werden. Aus diesem Beispiel wird deutlich, dass es von Vorteil sei kann, wenn die Ausleseschaltung für das wenigstens eine Signal eines jeweiligen Pixels, insbesondere für jede Spalte, wenigstens einen zusätzlichen Ausgang umfasst, wobei das Ergebnis der jeweiligen Auswahl für das wenigstens eine Signal eines jeweiligen Pixels, insbesondere einer jeweiligen Spalte, an dem wenigstens einen zusätzlichen Ausgang ausgebbar ist.

Nach einer anderen Ausführungsform der Erfindung ist die Auswahleinrichtung derart ausgelegt, dass die Ausgangssignale Verstärkungsfaktoren besitzen, die in einer aus den auswählbaren Verstärkungsfaktoren in aufsteigender Folge gebildeten Reihe unmittelbar aufeinander folgen. Anders formuliert ist die Auswahleinrichtung dazu ausgebildet, lediglich solche Kombinationen von Verstärkungsfaktoren auszuwählen, die zueinander nächstliegende Verstärkungen aufweisen. In dem vorgenannten Beispiel des Bildsensors mit genau zwei Kanalausgängen und genau vier Kanälen werden daher lediglich die hinsichtlich ihrer Verstärkungsfaktoren benachbarten Kanalpaarungen K1 und K2, K2 und K3, oder K3 und K4 ausgegeben. Bevorzugt umfasst die Auswahleinrichtung eines Bildsensors mit zwei Kanalausgängen und vier Kanälen für das wenigstens eine Signal eines jeweiligen Pixels, insbesondere für jede Spalte, zwei Komparatoren und zwei Schalter.

Grundsätzlich können die erfindungsgemäßen Bildsensoren auch derart ausgelegt sein, dass mehr als zwei Verstärkungsfaktoren ausgewählt werden. Dies kann insbesondere dann sinnvoll sein, wenn bei einem Überblenden die verstärkten Signale von mehr als zwei Ausgangssignalen mit unterschiedlichen Verstärkungen berücksichtigt werden sollen. Darüber hinaus sind auch Bildsensoren denkbar, die für das wenigstens eine Signal eines jeweiligen Pixels mehr als vier Ausgangsignale ausgeben.

Die Erfindung betrifft ferner ein Verfahren zum Auslesen eines Bildsensors für elektronische Kameras, wobei der Bildsensor eine Vielzahl von lichtempfindlichen Pixeln zur Erzeugung wenigstens eines belichtungsproportionalen Signals umfasst, wobei die Pixel mit einer wenigstens einen Verstärker aufweisenden Ausleseschaltung gekoppelt sind, wobei das wenigstens eine Signal eines jeweiligen Pixels mit unterschiedlichen Verstärkungsfaktoren verstärkt wird, um für das wenigstens eine Signal eines jeweiligen Pixels unterschiedlich verstärkte Signale zu erzeugen, wobei die Ausleseschaltung wenigstens einen Ausgang aufweist, um zumindest einige der unterschiedlich verstärkten Signale als Ausgangssignale auszugeben. Für das wenigstens eine Signal eines jeweiligen Pixels sind wenigstens drei unterschiedliche Verstärkungsfaktoren auswählbar, wobei in Abhängigkeit von der Höhe des wenigstens einen Signals eines jeweiligen Pixels die Zusammensetzung einer Gruppe von Verstärkungsfaktoren ausgewählt wird, mit denen die Ausgangssignale der Ausleseschaltung verstärkt werden, wobei die Anzahl der Verstärkungsfaktoren der Gruppe der Anzahl der Ausgangssignale entspricht, und wobei die Anzahl der Ausgangssignale für das wenigstens eine Signal eines jeweiligen Pixels wenigstens zwei beträgt und geringer ist als die Anzahl der auswählbaren Verstärkungsfaktoren.

Weiterbildungen des erfindungsgemäßen Verfahrens ergeben sich in analoger Weise aus den erläuterten Weiterbildungen des erfindungsgemäßen Bildsensors.

Vorteilhafte Ausführungsformen der Erfindung sind auch in den Unteransprüchen, der Beschreibung und der Zeichnung angegeben.

Die Erfindung wird im Folgenden beispielhaft unter Bezugnahme auf die Zeichnung beschrieben. Es zeigen, jeweils in schematischer Darstellung,
- Fig. 1a: Belichtungs-Signal-Kennlinien eines aus dem Stand der Technik bekannten Bildsensors mit zwei Kanälen mit unterschiedlichen Verstärkungen,
- Fig. 1b: eine kombinierte Belichtungs-Ausgabewert-Kennlinie des Bildsensors gemäß Fig. 1a,
- Fig. 2: ein Prinzipschaltbild der wesentlichen Funktionsgruppen eines CMOS-Bildsensors mit einer Ausleseschaltung,
- Fig. 3a: eine erste Ausführungsform einer erfindungsgemäßen Ausleseschaltung,
- Fig. 3b: die erfindungsgemäße Ausleseschaltung aus Fig. 3a mit nachgeordneter Analog-Digital-Wandlung,
- Fig. 3c: die erfindungsgemäße Ausleseschaltung aus Fig. 3a mit vorgeschaltetem Multiplexer,
- Fig. 4a: eine zweite Ausführungsform einer erfindungsgemäßen Ausleseschaltung,
- Fig. 4b: eine dritte Ausführungsform einer erfindungsgemäßen Ausleseschaltung, und
- Fig. 5: eine vierte Ausführungsform einer erfindungsgemäßen Ausleseschaltung.

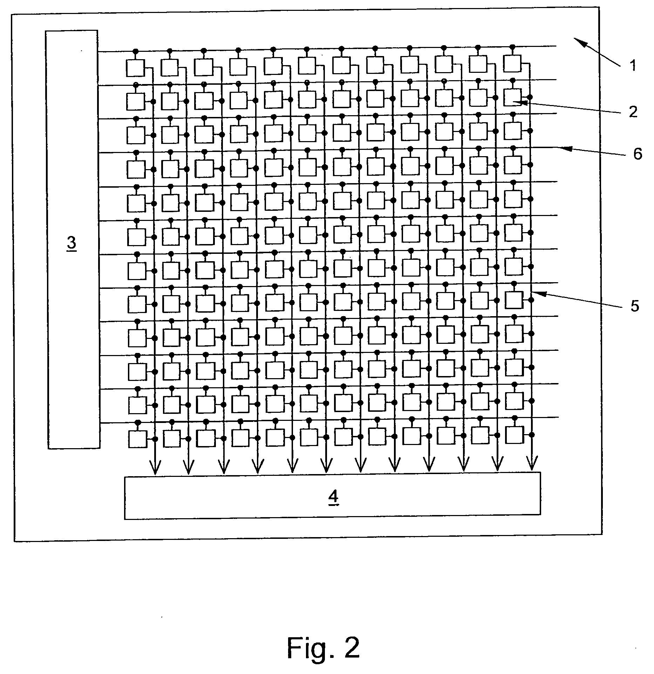

Das Prinzipschaltbild eines CMOS-Flächensensors ist in Fig. 2 dargestellt. Das Auslesen des in Fig. 2 dargestellten Bildsensors 1 erfolgt zeilenweise, d.h. Zeile für Zeile. Hierzu werden mittels einer jeweiligen Zeilenauswahlleitung 6 Pixel 2 einer jeweiligen Zeile auf Spaltenleitungen 5 geschaltet. Die Pixel 2 sind mit einer Ausleseschaltung 4 gekoppelt, um die an den Spaltenleitungen 5 anliegenden Signale der Pixel 2 der ausgewählten Zeile zu verstärken. Die verstärkten Signale werden dann über eine Multiplexereinrichtung zu Ausgängen des Bildsensors geführt. Darüber hinaus ist eine Zeilen-Adressierlogik 3 erkennbar, um die der jeweils auszulesenden Zeile zugeordnete Zeilenauswahlleitung 6 zu adressieren. Der Anschaulichkeit halber ist in Fig. 2 lediglich ein 12 x 12 Pixelfeld gezeigt.

Grundsätzlich ist die Anzahl der Zeilen und Spalten eines in der Praxis eingesetzten Bildsensors erheblich höher. Beispielsweise können die Bildsensoren eine Auflösung von 3018 x 2200 Pixeln besitzen. Bei einem CMOS-Zeilensensor ist jedoch nur eine einzige Zeile von Pixeln vorhanden, die jedoch häufiger ausgelesen wird.

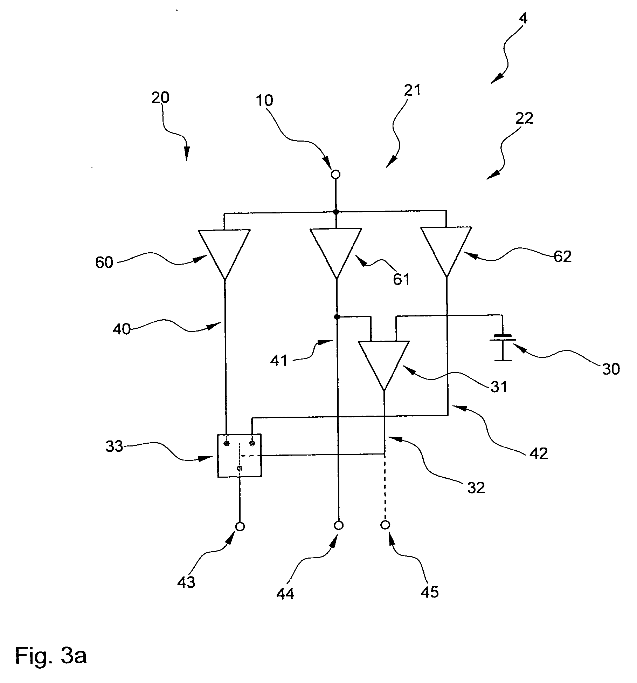

In Fig. 3a ist die Ausleseschaltung 4 aus Fig. 2 gemäß einer ersten Ausführungsform des erfindungsgemäßen Bildsensors dargestellt. Die Ausleseschaltung 4 umfasst für jede Spalte drei voneinander getrennte und voneinander unabhängige Kanäle 20, 21, 22, die jeweils einen Spaltenverstärker 60, 61, 62 aufweisen. Die Spaltenverstärker 60, 61, 62 der Kanäle, 20, 21, 22 besitzen unterschiedliche Verstärkungen, d.h. unterschiedliche Verstärkungsfaktoren, so dass das an einem gemeinsamen Eingang 10 anliegende Signal eines Pixels der jeweiligen Spalte in den Kanälen 20, 21, 22 unterschiedlich stark verstärkt wird. An den Ausgängen 40, 41, 42 der Spaltenverstärker 60, 61, 62 der Kanäle 20, 21, 22 liegen daher verstärkte Signale vor, die sich voneinander unterscheiden. Im dargestellten Beispiel besitzt der Spaltenverstärker 60 des Kanals 20 eine hohe Verstärkung, der Spaltenverstärker 61 des Kanals 21 eine mittlere Verstärkung, und der Spaltenverstärker 62 des Kanals 22 eine geringe Verstärkung.

Den drei Kanälen 20, 21, 22 sind jedoch lediglich zwei Kanalausgänge 43, 44 zugeordnet. Dabei ist vorgesehen, dass das verstärkte Signal des Spaltenverstärkers 61 des Kanals 21 (mit der mittleren Verstärkung) dem Kanalausgang 44 fest zugeordnet ist, d.h. das verstärkte Signal des Spaltenverstärkers 61 des Kanals 21 wird stets an dem einen Kanalausgang 44 als ein Ausgangssignal ausgegeben.

Darüber umfasst die Ausleseschaltung 4 eine Auswahleinrichtung, die für jede Spalte einen Komparator 31 umfasst, der die Höhe des verstärkten Signals des Spaltenverstärkers 61 des Kanals 21 mit einem Referenzwert 30 vergleicht. Die Auswahleinrichtung umfasst ferner einen Schalter 33, der in Abhängigkeit von dem Vergleich zwischen der Höhe des verstärkten Signals des Spaltenverstärkers 61 des Kanals 21 mit dem Referenzwert 30 auswählt, ob das verstärkte Signal des Spaltenverstärkers 60 des Kanals 20 oder das verstärkte Signal des Spaltenverstärkers 62 des Kanals 22 als weiteres Ausgangssignal auf den anderen Kanalsausgang 43 geschaltet werden soll. Hierzu wird das Ergebnis des Vergleichs von einem Ausgang 32 des Komparators 31 an den Schalter 33 übermittelt.

Ergibt der Vergleich, dass das verstärkte Signal des Spaltenverstärkers 61 des Kanals 21 über dem Referenzwert 30 liegt, wird das verstärkte Signal des Spaltenverstärkers 62 des Kanals 22 (mit der geringen Verstärkung) an dem anderen Kanalausgang 43 ausgegeben. Ergibt der Vergleich hingegen, dass das verstärkte Signal des Spaltenverstärkers 61 des Kanals 21 unter dem Referenzwert 30 liegt, wird das verstärkte Signal des Spaltenverstärkers 60 des Kanals 20 (mit der hohen Verstärkung) an dem anderen Kanalausgang 43 ausgegeben.

Bei den drei Kanälen 20, 21, 22 weist die in Zusammenhang mit Fig. 1 beschriebene Belichtungs-Ausgabewert-Kennlinie zwei Übergangsbereiche auf, in denen jeweils überblendet wird, nämlich zwischen den Kanälen 20 und 21 sowie zwischen den Kanälen 21 und 22. Die vorgenannte Auswahleinrichtung stellt dabei sicher, dass die verstärkten Signale der Spaltenverstärker 60, 61 der Kanäle 20 und 21 an den Kanalausgängen 43, 44 anliegen, wenn ein Überblenden im Übergangsbereich zwischen den Kanälen 20 und 21 erforderlich ist, und dass die verstärkten Signale der Spaltenverstärker 62, 61 der Kanäle 22 und 21 an den Kanalausgängen 43, 44 anliegen, wenn ein Überblenden im Übergangsbereich zwischen den Kanälen 21 und 22 erforderlich ist. Da somit mehrere Übergangsbereiche für ein Überblenden zwischen verschiedenen Kanälen vorliegen, können die Kanäle 20, 21, 22 besser rauschoptimiert sein. Insbesondere kann hierdurch vermieden werden, dass ein Kanal, der eine geringe Verstärkung besitzt, in einem unteren Bereich seiner Aussteuerungsdynamik betrieben wird. Dies ist von Vorteil, da das Signal/Rausch-Verhältnis in dem unteren Bereich der Aussteuerungsdynamik eines Spaltenverstärkers generell vergleichsweise schlecht ist.

Die Information, ob es sich bei dem an dem Kanalausgang 43 anliegenden verstärkten Signal um das verstärkte Signal des Spaltenverstärkers 60 des Kanals 20 oder das verstärkte Signal des Spaltenverstärkers 62 des Kanals 22 handelt, kann außerhalb des Bildsensors durch einen dem vorgenannten Vergleich entsprechenden Vergleich rekonstruiert werden, so dass diese Information von der Ausleseschaltung 4 nicht mit ausgegeben werden muss. Optional kann hierfür jedoch ein zusätzlicher Ausgang 45 vorgesehen sein.

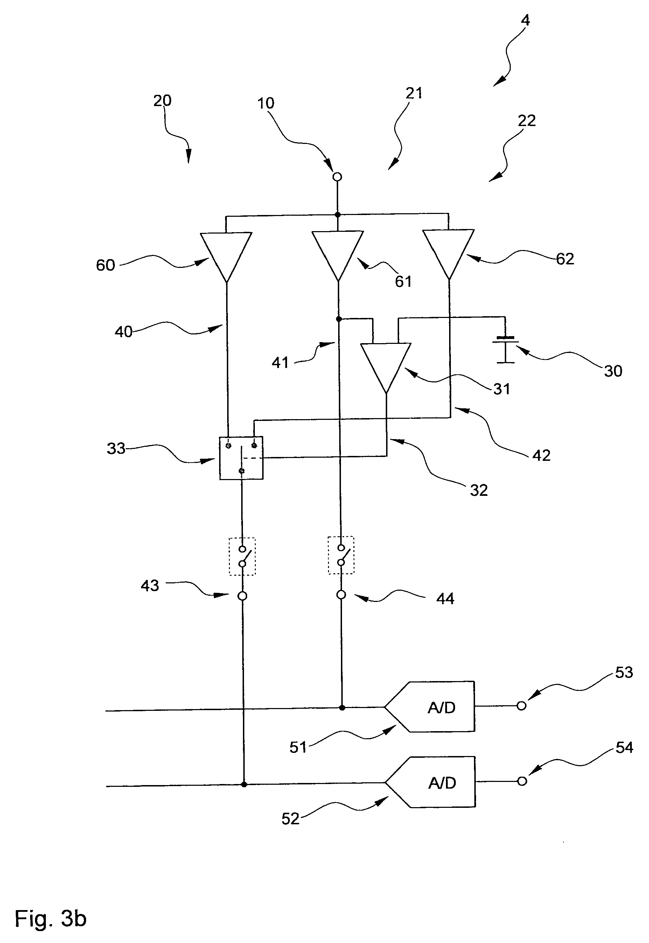

In Fig. 3b ist gegenüber Fig. 3a zusätzlich ein Signalbus dargestellt, mit dem die Kanalausgänge 43, 44 aller Spalten über Schalter gekoppelt sind, die zu einer Multiplexereinrichtung gehören, um die Kanalausgänge 43, 44 der einzelnen Spalten nacheinander auf den Signalbus zu schalten. Der dargestellte Signalbus umfasst zwei Signalleitungen, wobei der Kanalausgang 43 auf die eine Signalleitung und der Kanalausgang 44 auf die andere Signalleitung gekoppelt ist. Die beiden Signalleitungen enden in Bildsensorausgängen 53, 54, an denen die zuvor mittels eines jeweiligen Analog-Digital-Wandlers 51, 52 digitalisierten von den Kanalausgängen 43, 44 ausgegebenen verstärkten Signale ausgegeben werden. Bevorzugt ist jede Signalleitung des Signalbusses noch mit einem nicht dargestellten Ausgangsverstärker versehen, um die von den Kanalausgängen 43, 44 ausgegebenen verstärkten Signale weiter zu verstärken, wobei der jeweilige Ausgangsverstärker in Signalrichtung unmittelbar vor dem jeweiligen Analog-Digital-Wandler 51, 52 angeordnet ist.

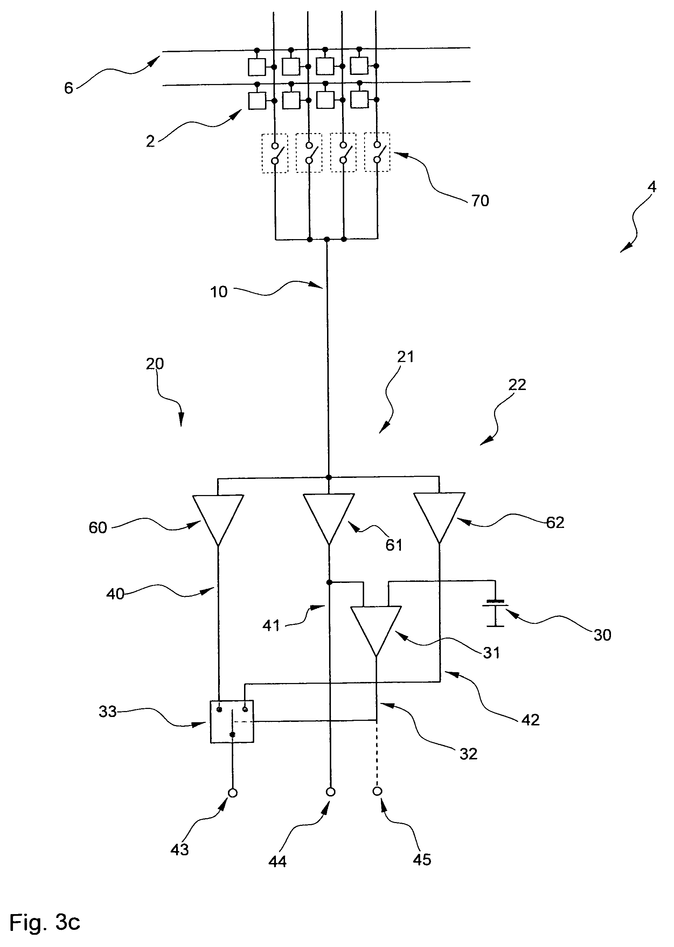

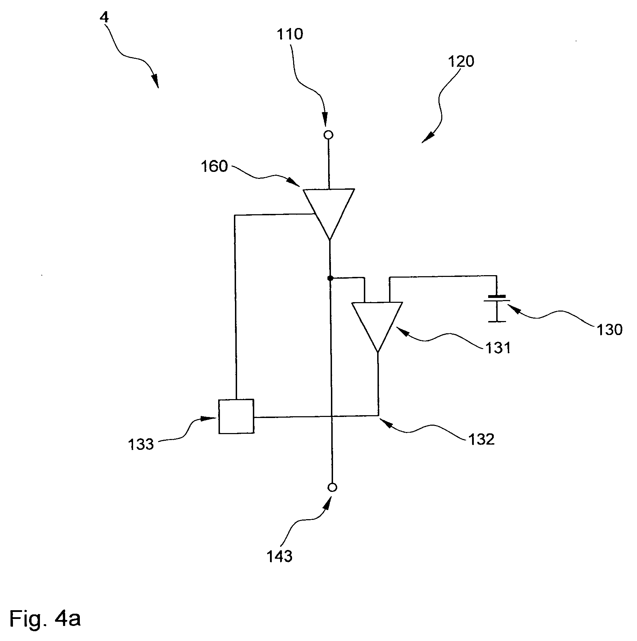

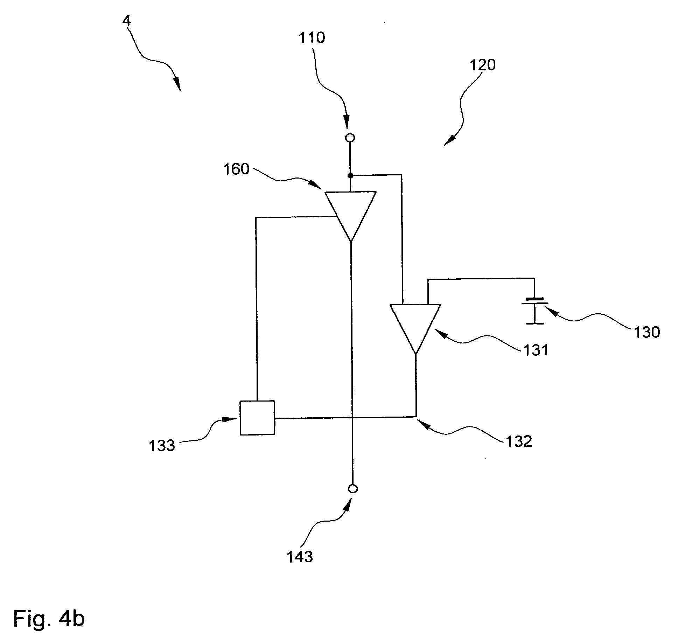

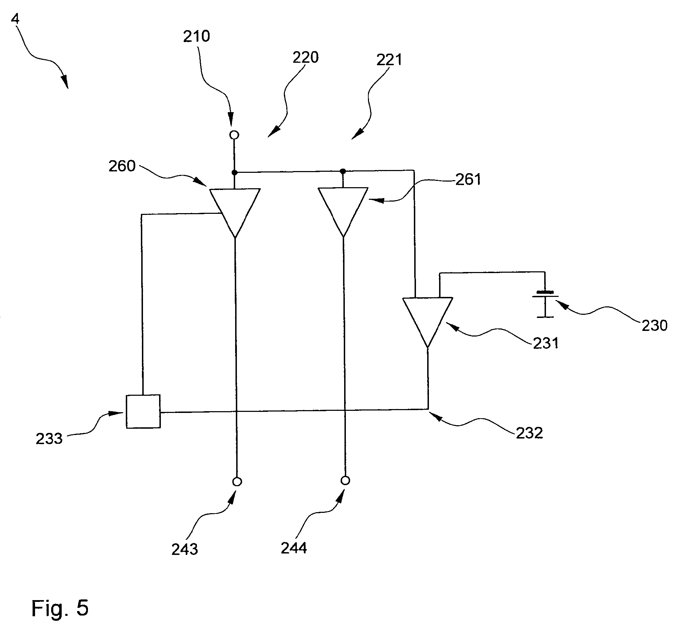

In Fig. 3c ist gegenüber Fig. 3a zusätzlich ein der Ausleseschaltung 4 vorgeschalteter Multiplexer mit Schaltern 70 dargestellt, der die Signale der Pixel 2 mehrerer Spalten zeitlich nacheinander auf die drei Kanäle 20, 21, 22 schaltet. Mehrere Spalten, beispielsweise jeweils zwei oder vier Spalten, teilen sich eine gemeinsame Verstärkereinrichtung. Die Verstärkereinrichtung arbeitet die zugeordneten Spalten im Zeitmultiplex nacheinander ab, wobei es möglich ist, dass die Pixel einer Zeile der zugeordneten Spalten bereits zeitlich nacheinander aus dem Pixelfeld ausgelesen werden. Eine den Schaltern 70 vorgeschaltete Sample-and-Hold-Schaltung für die Signale der Pixel der Spalten ist in Fig. 3c nicht dargestellt. Grundsätzlich kann ein derartiger Multiplexer auch bei den nachstehend erläuterten Bildsensoren gemäß den Fig. 4a, 4b und 5 verwendet werden.

In Fig. 4a ist eine zweite Ausführungsform des erfindungsgemäßen Bildsensors dargestellt, bei der die Ausleseschaltung 4 für jede Spalte lediglich einen einzigen Kanal 120 umfasst. Der Kanal 120 umfasst einen einzigen Spaltenverstärker 160, mit dem das an einem Eingang 110 anliegende Signal eines jeweiligen Pixels verstärkt werden kann, wobei der Verstärkungsfaktor des Spaltenverstärkers 160 verstellbar oder umschaltbar ist. Das an dem Eingang 110 anliegende Signal kann daher mehrfach nacheinander und mit verschiedenen Verstärkungsfaktoren verstärkt werden, so dass aus einem Signal eines jeweiligen Pixels unterschiedlich verstärkte Signale erzeugt werden können, wie dies auch bei den Bildsensoren gemäß Fig. 3a und 3b der Fall ist.

Beispielsweise kann der Spaltenverstärker 160 auf drei voneinander verschiedene Verstärkungsfaktoren einstellbar sein, d.h. auf einen Verstärkungsfaktor mit einer geringen Verstärkung, einen Verstärkungsfaktor mit einer mittleren Verstärkung und einen Verstärkungsfaktor mit einer hohen Verstärkung. Grundsätzlich können von dem Spaltenverstärker 160 aus einem an dem Eingang 110 anliegenden Signal eines jeweiligen Pixels daher drei unterschiedlich verstärkte Signale erzeugt werden, die somit den unterschiedlich verstärkten Signalen aus den Fig. 3a und 3b entsprechen.

Da für ein Überblenden, wie es vorstehend beschrieben ist, jedoch lediglich zwei unterschiedlich verstärkte Signale erforderlich sind, werden bei dem Bildsensor gemäß Fig. 4a auch lediglich die beiden für das jeweilige Überblenden erforderlichen unterschiedlich verstärkten Signale erzeugt. Hierin unterscheidet sich der Bildsensor gemäß Fig. 4a von den Bildsensoren gemäß den Fig. 3a und 3b, bei denen auch dasjenige verstärkte Signal erzeugt wird, welches letztlich nicht für das jeweilige Überblenden benötigt und daher nicht von der Ausleseschaltung 4 ausgegeben wird.

Um lediglich die beiden für das jeweilige Überblenden benötigten verstärkten Signale zu erzeugen, besitzt die Ausleseschaltung 4 wiederum eine Auswahleinrichtung, die einen Referenzwert 130, einen Komparator 131 und ein Stellmittel 133 umfasst. Zunächst ist der Spaltenverstärker 160 auf den Verstärkungsfaktor mit der mittleren Verstärkung eingestellt, um ein entsprechend verstärktes Signal mit einer mittlerer Verstärkung zu erzeugen, welches an einem Ausgang 143 der Ausleseschaltung 4 als ein Ausgangssignal ausgegeben wird.

Gleichzeitig wird durch den Komparator 131 die Höhe des verstärkten Signals mit der mittleren Verstärkung mit dem Referenzwert 130 verglichen. Ergibt der Vergleich, dass das verstärkte Signal mit der mittleren Verstärkung über dem Referenzwert 130 liegt, wird der Spaltenverstärker 160 auf den geringen Verstärkungsfaktor umgeschaltet, um ein entsprechend verstärktes Signal mit einer geringen Verstärkung zu erzeugen, welches dann und im Anschluss an das verstärkte Signal mit der mittleren Verstärkung an dem Ausgang 143 der Ausleseschaltung 4 als weiteres Ausgangssignal ausgegeben wird. Ergibt der Vergleich hingegen, dass das verstärkte Signal mit der mittleren Verstärkung unter dem Referenzwert 130 liegt, wird der Spaltenverstärker 160 auf den hohen Verstärkungsfaktor umgeschaltet, um ein entsprechend verstärktes Signal mit einer hohen Verstärkung zu erzeugen, welches an dem Ausgang 143 der Ausleseschaltung 4 ausgegeben wird.

Zum Umschalten des Verstärkungsfaktors des Spaltenverstärkers 160 ist das Stellmittel 133 vorgesehen, das mit dem Ausgang 132 des Komparators 131 verbunden ist, welcher das Ergebnis des Vergleichs übermittelt, und das seinerseits dazu ausgelegt ist, ein entsprechendes Stellsignal an den Spaltenverstärker 160 zu übermitteln.

In Analogie zu dem Bildsensor gemäß Fig. 3a kann auch der Bildsensor gemäß Fig. 4a einen zusätzlichen Ausgang aufweisen, um das Ergebnis des Vergleichs des Komparators 131 für das Signal eines jeweiligen Pixels nach außerhalb des Bildsensors auszugeben. Darüber hinaus können die Ausgänge 143 mehrerer oder aller Spalten des Bildsensors gemäß Fig. 4a auch mit einem wie in Fig. 3b gezeigten Signalbus gekoppelt sein.

Der Bildsensor gemäß Fig. 4a vergleicht ein durch den Spaltenverstärker 160 verstärktes Signal mit dem Referenzwert 130. Hierin unterscheidet sich der Bildsensor gemäß Fig. 4b, der das Signal eines jeweiligen Pixels mit einem Referenzwert 130 vergleicht, bevor das jeweilige Signal durch den Spaltenverstärker 160 verstärkt wird.

Bei dem Bildsensor gemäß Fig. 5 handelt es sich um eine Mischform aus den mehrkanaligen Bildsensoren gemäß Fig. 3a bis 3c und den einkanaligen Bildsensoren gemäß den Fig. 4a und 4b.

Bei dem Bildsensor gemäß Fig. 5 umfasst die Ausleseschaltung 4 für jede Spalte zwei Kanäle 220, 221, wobei wiederum die drei vorgenannten Verstärkungsfaktoren auswählbar sind. Jeder Kanal 220, 221 umfasst einen eigenen Spaltenverstärker 260, 261. Der Kanal 221 verstärkt das an dem Eingang 210 anliegende Signal eines jeweiligen Pixels mit der mittleren Verstärkung. Das verstärkte Signal des Spaltenverstärkers 261 des Kanals 221 wird an dem Kanalausgang 244 ausgegeben. Der Spaltenverstärker 260 des Kanals 220 besitzt einen verstellbaren oder umschaltbaren Verstärkungsfaktor, wobei das durch den Spaltenverstärker 260 verstärkte Signal an dem Kanalausgang 243 ausgegeben wird.

Zur Bestimmung, ob durch den Spaltenverstärker 260 das an dem Eingang 210 anliegende Signal mit dem geringen oder dem hohen Verstärkungsfaktor verstärkt wird, wird die Höhe des an dem Eingang 210 anliegenden Signals eines jeweiligen Pixels mittels eines Komparators 231 mit einem Referenzwert 230 verglichen. Das Ergebnis dieses Vergleichs wird wiederum einem Stellmittel 233 für die Verstellung der Verstärkung des Spaltenverstärkers 260 zugeführt, das mit dem Ausgang 232 des Komparators 231 verbunden ist. Ergibt der Vergleich, dass das an dem Eingang 210 anliegende Signal über dem Referenzwert 230 liegt, wird der Spaltenverstärker 260 auf den geringen Verstärkungsfaktor eingestellt, andernfalls auf den hohen Verstärkungsfaktor.

Gegenüber den mehrkanaligen Bildsensoren gemäß Fig. 3a bis 3c besitzt der Bildsensor gemäß Fig. 5 den Vorteil, dass anstelle von drei Kanälen mit einem jeweiligen Spaltenverstärker lediglich zwei Kanäle mit einem jeweiligen Spaltenverstärker erforderlich sind. Gegenüber den einkanaligen Bildsensoren gemäß den Fig. 4a und 4b besitzt der Bildsensor gemäß Fig. 5 den Vorteil, dass die beiden an den beiden Kanalausgängen 243, 244 auszugebenden verstärkten Signale zumindest annähernd gleichzeitig ausgegeben werden können, wodurch die Auslesegeschwindigkeit des Bildsensors erhöht werden kann.

In den Fig. 3a bis 3c wird für die drei Kanäle 20, 21, 22 ein einziges, gemeinsames Signal eines jeweiligen Pixels verwendet, das beispielsweise in einem jeweiligen Kondensator einer Sample-and-Hold-Stufe der Ausleseschaltung gespeichert ist, die den Spaltenverstärkern 60, 61, 62, 160 vorgeschaltet ist und für jede Spalte einen Kondensator zur Speicherung eines analogen Spannungswerts aufweist. Das gemeinsame Signal kann daher gleichzeitig auf die Kanäle 20, 21, 22 geschaltet werden. Ebenso kann der Erzeugung der verstärkten Signale in dem gemeinsamen Kanal 120 gemäß den Fig. 4a und 4b oder den Kanälen 143, 144 gemäß Fig. 5 lediglich ein einziges, gemeinsames Signal eines jeweiligen Pixels zugrunde gelegt sein.

Alternativ ist es jedoch auch möglich, dass aus einer während eines einzigen Belichtungsvorgangs in einem jeweiligen Pixel erzeugten Ladung mehrere Signale erzeugt werden, die anschließend nacheinander an die Ausleseschaltung übergeben werden, so dass den unterschiedlichen Verstärkungen bereits verschieden hohe Signale des jeweiligen Pixels zugrunde liegen, die jedoch auf ein und demselben Ladungssignal basieren, d.h. auf ein und derselben Belichtung des Pixels. Hierfür kann die vorgenannte Sample-and-Hold-Stufe für jeden Kanal einen Kondensator aufweisen, wie es beispielsweise aus den eingangs zum Stand der Technik genannten US 2005/0052554 A1 und EP 1 681 850 A1 bekannt ist. Dabei ist es für einen mehrkanaligen Bildsensor bevorzugt, wenn für die Spaltenverstärker der Kanäle abweichend von Fig. 3a bis 3c und 5 kein gemeinsamer Eingang verwendet wird, da sonst zwischen dem gemeinsamen Eingang und den Spaltenverstärkern zusätzliche Schalter notwendig sind, sondern wenn die Spaltenverstärker direkt an den jeweiligen zugeordneten Kondensator gekoppelt sind.

Darüber hinaus ist in den Fig. 3a bis 3c und Fig. 5 pro Spaltenverstärker sowie bei dem Spaltenverstärker gemäß Fig. 4a und 4b lediglich ein einziger Spaltenverstärkereingang dargestellt. Bevorzugt handelt es sich bei den gezeigten Spaltenverstärkern um Differenzverstärker, wobei für eine korrelierte Doppelabtastung (correlated double sampling) der Pixel des Bildsensors zur rechnerischen Kompensation des thermischen Rauschens pro Spaltenverstärker ein weiterer Spaltenverstärkereingang mit vorgeschaltetem Referenzkondensator vorgesehen ist.

Durch die vorliegende Erfindung können die Vorteile einer mehrfachen Verstärkung mit unterschiedlichen Verstärkungsfaktoren bei einem Bildsensor genutzt werden, wobei gleichzeitig der hierfür erforderliche Aufwand minimal gehalten werden kann.

### Bezugszeichenliste

- 1: Bildsensor
- 2: Pixel
- 3: Zeilen-Adressierlogik
- 4: Ausleseschaltung
- 5: Spaltenleitung
- 6: Zeilenauswahlleitung
- 10: Eingang
- 20: Kanal mit hoher Verstärkung
- 21: Kanal mit mittlerer Verstärkung
- 22: Kanal mit geringer Verstärkung
- 30: Referenzwert
- 31: Komparator
- 32: Ausgang des Komparators
- 33: Schalter
- 40: Ausgang des Spaltenverstärkers 60
- 41: Ausgang des Spaltenverstärkers 61
- 42: Ausgang des Spaltenverstärkers 62
- 43: Kanalausgang der Ausleseschaltung
- 44: Kanalausgang der Ausleseschaltung
- 45: zusätzlicher Ausgang
- 51: Analog-Digital-Wandler
- 52: Analog-Digital-Wandler
- 53: Bildsensorausgang
- 54: Bildsensorausgang
- 60: Spaltenverstärker des Kanals 20
- 61: Spaltenverstärker des Kanals 21
- 62: Spaltenverstärker des Kanals 22
- 110: Eingang
- 120: Kanal
- 130: Referenzwert
- 131: Komparator
- 132: Ausgang des Komparators
- 133: Stellmittel
- 143: Ausgang der Ausleseschaltung
- 160: Spaltenverstärker
- 210: Eingang
- 220: Kanal
- 221: Kanal
- 230: Referenzwert
- 231: Komparator
- 232: Ausgang des Komparators
- 233: Stellmittel
- 243: Ausgang der Ausleseschaltung
- 244: Ausgang der Ausleseschaltung
- 260: Spaltenverstärker
- 261: Spaltenverstärker

## Patentansprüche

1. Bildsensor für elektronische Kameras, mit einer Vielzahl von lichtempfindlichen Pixeln (2) zur Erzeugung wenigstens eines belichtungsproportionalen Signals, wobei die Pixel (2) mit einer wenigstens einen Verstärker (60, 61, 62; 160; 260, 261) aufweisenden Ausleseschaltung (4) gekoppelt sind, die dazu ausgelegt ist, das wenigstens eine Signal eines jeweiligen Pixels (2) mit unterschiedlichen Verstärkungsfaktoren zu verstärken, um für das wenigstens eine Signal eines jeweiligen Pixels (2) unterschiedlich verstärkte Signale zu erzeugen, wobei die Ausleseschaltung (4) wenigstens einen Ausgang (43, 44; 143; 243, 244) aufweist, um zumindest einige der unterschiedlich verstärkten Signale als Ausgangssignale auszugeben, wobei für das wenigstens eine Signal eines jeweiligen Pixels (2) wenigstens drei unterschiedliche Verstärkungsfaktoren auswählbar sind, und wobei die Ausleseschaltung (4) eine Auswahleinrichtung (30, 31, 33; 130, 131, 133; 230, 231, 233) umfasst,
**dadurch gekennzeichnet,**
**dass** die Auswahleinrichtung (30, 31, 33; 130, 131, 133; 230, 231, 233) dazu ausgelegt ist, in Abhängigkeit von der Höhe des wenigstens einen Signals eines jeweiligen Pixels (2) die Zusammensetzung einer Gruppe von unmittelbar aufeinander folgenden Verstärkungsfaktoren auszuwählen, mit denen die Ausgangssignale der Ausleseschaltung (4) verstärkt sind, wobei die Anzahl der Verstärkungsfaktoren der Gruppe der Anzahl der Ausgangssignale entspricht, und wobei die Anzahl der Ausgangssignale für das wenigstens eine Signal eines jeweiligen Pixels (2) wenigstens zwei beträgt und geringer ist als die Anzahl der auswählbaren Verstärkungsfaktoren.

2. Bildsensor nach Anspruch 1,
wobei der Bildsensor (1) mehrere Analog-Digital-Wandler (51, 52) zum Digitalisieren der an dem wenigstens einen Ausgang (43, 44; 143; 243, 244) ausgegebenen Ausgangssignale umfasst, und wobei die Auswahleinrichtung (30, 31, 33; 130, 131, 133; 230, 231, 233) Stellmittel (33; 133; 233) umfasst, die zwischen dem wenigstens einen Verstärker (60, 61, 62; 160; 260, 261) und den Analog-Digital-Wandlern (51, 52) angeordnet sind.

3. Bildsensor nach Anspruch 1 oder 2,
wobei für das wenigstens eine Signal eines jeweiligen Pixels (2) die Erzeugung der unterschiedlich verstärkten Signale zumindest teilweise in voneinander getrennten Kanälen (20, 21, 22; 220, 221) mit einem jeweiligen Verstärker (60, 61, 62; 260, 261) erfolgt, wobei der wenigstens eine Ausgang (43, 44) eine der Anzahl der ausgewählten Verstärkungsfaktoren entsprechende Anzahl an Kanalausgängen (43, 44) umfasst.

4. Bildsensor nach Anspruch 3,
wobei die Ausleseschaltung (4) derart ausgelegt ist, dass das verstärkte Signal zumindest eines der Kanäle (21) stets an einem der Kanalausgänge (44) als eines der Ausgangssignale ausgegeben wird.

5. Bildsensor nach Anspruch 3 oder 4,
wobei die Kanäle (20, 21, 22; 220, 221) unterschiedliche Empfindlichkeiten besitzen.

6. Bildsensor nach zumindest einem der vorstehenden Ansprüche,
wobei für das wenigstens eine Signal eines jeweiligen Pixels (2) die Erzeugung der unterschiedlich verstärkten Signale zumindest teilweise nacheinander erfolgt.

7. Bildsensor nach zumindest einem der vorstehenden Ansprüche,
wobei für das wenigstens eine Signal eines jeweiligen Pixels (2) die Erzeugung der unterschiedlich verstärkten Signale zumindest teilweise in einem gemeinsamen Kanal (120) mit einem gemeinsamen Verstärker (160) des wenigstens einen Verstärkers erfolgt, wobei der Verstärkungsfaktor des gemeinsamen Verstärkers (160) verstellbar ist.

8. Bildsensor nach zumindest einem der vorstehenden Ansprüche,
wobei die Ausleseschaltung (4) derart ausgelegt ist, dass für das wenigstens eine Signal eines jeweiligen Pixels (2) die Erzeugung der unterschiedlich verstärkten Signale nur für einen Teil der auswählbaren Verstärkungsfaktoren erfolgt.

9. Bildsensor nach zumindest einem der vorstehenden Ansprüche,
wobei die Auswahleinrichtung (30, 31, 33; 130, 131, 133; 230, 231, 233) dazu ausgelegt ist, die Auswahl in Abhängigkeit von wenigstens einem Vergleich zwischen wenigstens einem Referenzwert (30; 130; 230) und der Höhe des wenigstens einen Signals des jeweiligen Pixels (2) vorzunehmen.

10. Bildsensor nach zumindest einem der vorstehenden Ansprüche,
wobei die Ausleseschaltung (4) dazu ausgelegt ist, für das wenigstens eine Signal eines jeweiligen Pixels (2) genau zwei Verstärkungsfaktoren auszuwählen.

11. Bildsensor nach Anspruch 10,
wobei genau drei Verstärkungsfaktoren auswählbar sind, nämlich ein Verstärkungsfaktor mit einer geringen Verstärkung, ein Verstärkungsfaktor mit einer mittleren Verstärkung, und ein Verstärkungsfaktor mit einer hohen Verstärkung.

12. Bildsensor nach Anspruch 11,
wobei die Ausleseschaltung (4) derart ausgelegt ist, dass der Verstärkungsfaktor mit der mittleren Verstärkung immer ausgewählt wird, und dass bestimmt wird, welcher der beiden anderen Verstärkungsfaktoren zusätzlich ausgewählt wird.

13. Bildsensor nach zumindest einem der vorstehenden Ansprüche,
wobei die Ausleseschaltung (4) für das wenigstens eine Signal eines jeweiligen Pixels (2) wenigstens einen zusätzlichen Ausgang (45) umfasst, und wobei das Ergebnis der jeweiligen Auswahl für das wenigstens eine Signal eines jeweiligen Pixels (2) an dem wenigstens einen zusätzlichen Ausgang (45) ausgebbar ist.

14. Bildsensor nach zumindest einem der vorstehenden Ansprüche,
wobei die Auswahleinrichtung (30, 31, 33; 130, 131, 133) derart ausgelegt ist, dass die Ausgangssignale Verstärkungsfaktoren besitzen, die in einer aus den auswählbaren Verstärkungsfaktoren in aufsteigender Folge gebildeten Reihe unmittelbar aufeinander folgen.

15. Verfahren zum Auslesen eines Bildsensors für elektronische Kameras, wobei der Bildsensor (1) eine Vielzahl von lichtempfindlichen Pixeln (2) zur Erzeugung wenigstens eines belichtungsproportionalen Signals umfasst, wobei die Pixel (2) mit einer wenigstens einen Verstärker (60, 61, 62; 160) aufweisenden Ausleseschaltung (4) gekoppelt sind, wobei das wenigstens eine Signal eines jeweiligen Pixels (2) mit unterschiedlichen Verstärkungsfaktoren verstärkt wird, um für das wenigstens eine Signal eines jeweiligen Pixels (2) unterschiedlich verstärkte Signale zu erzeugen, wobei die Ausleseschaltung (4) wenigstens einen Ausgang (43, 44; 143) aufweist, an dem zumindest einige der unterschiedlich verstärkten Signale als Ausgangssignale ausgegeben werden, wobei für das wenigstens eine Signal eines jeweiligen Pixels (2) wenigstens drei unterschiedliche Verstärkungsfaktoren auswählbar sind,
**dadurch gekennzeichnet,**
**dass** in Abhängigkeit von der Höhe des wenigstens einen Signals eines jeweiligen Pixels (2) die Zusammensetzung einer Gruppe von unmittelbar aufeinander folgenden Verstärkungsfaktoren ausgewählt wird, mit denen die Ausgangssignale der Ausleseschaltung (4) verstärkt werden, wobei die Anzahl der Verstärkungsfaktoren der Gruppe der Anzahl der Ausgangssignale entspricht, wobei die Anzahl der Ausgangssignale für das wenigstens eine Signal eines jeweiligen Pixels (2) wenigstens zwei beträgt und geringer ist als die Anzahl der auswählbaren Verstärkungsfaktoren.

## Claims

1. An image sensor for electronic cameras, having a plurality of light-sensitive pixels (2) for the generation of at least one signal proportional to exposure, wherein the pixels (2) are coupled to a read-out circuit (4) which has at least one amplifier (60, 61, 62; 160; 260, 261) and which is adapted to amplify the at least one signal of a respective pixel (2) by different amplification factors to generate differently amplified signals for the at least one signal of a respective pixel (2); wherein the read-out circuit (4) has at least one output (43, 44; 143; 243, 244) to output at least some of the differently amplified signals as output signals; wherein at least three different amplification factors can be selected for the at least one signal of a respective pixel (2); and wherein the read-out circuit (4) comprises a selection device (30, 31, 33; 130, 131, 133; 230, 231, 233), **characterized in that**
the selection device (30, 31, 33; 130, 131, 133; 230, 231, 233) is adapted to select the composition of a group of directly consecutive amplification factors in dependence on the level of the least one signal of a respective pixel (2), the output signals of the read-out circuit (4) being amplified by said amplification factors, with the number of amplification factors of the group corresponding to the number of output signals, and with the number of output signals for the at least one signal of a respective pixel (2) amounting to at least two and being less than the number of selectable amplification factors.

2. An image sensor in accordance with claim 1,
wherein the image sensor (1) comprises a plurality of analog-to-digital converters (51, 52) for the digitizing of the output signals output at the at least one output (43, 44; 143; 243, 244), and wherein the selection device (30, 31, 33; 130, 131, 133; 230, 321, 233) comprises adjustment means (33; 133; 233) which are arranged between the at least one amplifier (60, 61, 62; 160; 260, 261) and the analog-to-digital converters (51, 52).

3. An image sensor in accordance with claim 1 or claim 2,
wherein the generation of the differently amplified signals takes place for the at least one signal of a respective pixel (2) at least partly in mutually separate channels (20, 21, 22; 220, 221) using a respective amplifier (60, 61, 62; 260, 261), with the at least one output (43, 44) comprising a number of channel outputs (43, 44) corresponding to the number of selected amplification factors.

4. An image sensor in accordance with claim 3,
wherein the read-out circuit (4) is adapted such that the amplified signal of at least one of the channels (21) is always output at one of the channel outputs (44) as one of the output signals.

5. An image sensor in accordance with claim 3 or claim 4,
wherein the channels (20, 21, 22; 220, 221) have different sensitivities.

6. An image sensor in accordance with at least one of the preceding claims,
wherein the generation of the differently amplified signals for the at least one signal of a respective pixel (2) takes place at least partly sequentially.

7. An image sensor in accordance with at least one of the preceding claims,
wherein the generation of the differently amplified signals for the at least one signal of a respective pixel (2) takes place at least partly in a common channel (120) with a common amplifier (160) of the at least one amplifier, with the amplification factor of the common amplifier (160) being adjustable.

8. An image sensor in accordance with at least one of the preceding claims,
wherein the read-out circuit (4) is adapted such that the generation of the differently amplified signals for the at least one signal of a respective pixel (2) only takes place for some of the selectable amplification factors.

9. An image sensor in accordance with at least one of the preceding claims,
wherein the selection device (30, 31, 33; 130, 131, 133; 230, 231, 233) is adapted to carry out the selection in dependence on at least one comparison between at least one reference value (30; 130; 230) and the level of the at least one signal of the respective pixel (2).

10. An image sensor in accordance with at least one of the preceding claims,
wherein the read-out circuit (4) is adapted to select precisely two amplification factors for the at least one signal of a respective pixel (2).

11. An image sensor in accordance with claim 10,
wherein precisely three amplification factors can be selected, namely an amplification factor with a low amplification, an amplification factor with a middle amplification and an amplification factor with a high amplification.

12. An image sensor in accordance with claim 11,
wherein the read-out circuit (4) is adapted such that the amplification factor with the middle amplification is always selected and it is determined which of the two other amplification factors is additionally selected.

13. An image sensor in accordance with at least one of the preceding claims,
wherein the read-out circuit (4) for the at least one signal of a respective pixel (2) comprises at least one additional output (45), and wherein the result of the respective selection for the at least one signal of a respective pixel (2) can be output at the at least one additional output (45).

14. An image sensor in accordance with at least one of the preceding claims,
wherein the selection device (30, 31, 33; 130, 131, 133) is adapted such that the output signals have amplification factors which are directly consecutive in a row formed from the selectable amplification factors in rising order.

15. A method for the reading out of an image sensor for electronic cameras, wherein the image sensor (1) comprises a plurality of light-sensitive pixels (2) for the generation of at least one signal proportional to exposure; wherein the pixels (2) are coupled to a read-out circuit (4) having at least one amplifier (60, 61, 62; 160); wherein the at least one signal of a respective pixel (2) is amplified by different amplification factors to generate differently amplified signals for the at least one signal of a respective pixel (2); wherein the read-out circuit (4) has at least one output (43, 44; 143) at which at least some of the differently amplified signals are output as output signals; and wherein at least three different amplification factors can be selected for the at least one signal of a respective pixel (2),
**characterized in that**
the composition of a group of directly consecutive amplification factors is selected in dependence on the level of the at least one signal of a respective pixel (2), the output signals of the read-out circuit (4) being amplified by said amplification factors, with the number of amplification factors of the group corresponding to the number of output signals, and with the number of output signals for the at least one signal of a respective pixel (2) amounting to at least two and being less than the number of selectable amplification factors.

## Revendications

1. Capteur d'images pour caméras électroniques, comportant une multitude de pixels (2) photosensibles pour engendrer au moins un signal proportionnel à l'exposition, les pixels (2) étant couplés à un circuit de lecture (4) présentant au moins un amplificateur (60, 61, 62 ; 160: 260, 261), lequel est conçu pour amplifier ledit au moins un signal d'un pixel (2) respectif avec différents facteurs d'amplification pour engendrer pour ledit au moins signal d'un pixel (2) respectif des signaux différemment amplifiés, le circuit de lecture (4) présentant au moins une sortie (43, 44 ; 143 ; 243, 244) pour émettre au moins quelques uns des signaux différemment amplifiés en tant que signaux de sortie, au moins trois différents facteurs d'amplification pouvant être sélectionnés pour ledit au moins un signal d'un pixel (2) respectif, et le circuit de lecture (4) comprenant un dispositif de sélection (30, 31, 33 ; 130, 131, 133 ; 230, 231, 233),
**caractérisé en ce que**
le dispositif de sélection (30, 31, 33 ; 130, 131, 133 ; 230, 231, 233) est conçu pour sélectionner, en fonction de la hauteur dudit au moins un signal d'un pixel (2) respectif, la composition d'un groupe de facteurs d'amplification directement consécutifs avec lesquels les signaux de sortie du circuit de lecture (4) sont amplifiés, le nombre des facteurs d'amplification du groupe correspondant au nombre des signaux de sortie, et le nombre des signaux de sortie pour ledit au moins un signal d'un pixel (2) respectif étant d'au moins deux et inférieur au nombre des facteurs d'amplification sélectionnables.

2. Capteur d'images selon la revendication 1, dans lequel le capteur d'images (1) comprend plusieurs convertisseurs analogiques-numériques (51, 52) pour numériser les signaux de sortie émis à ladite au moins une sortie (43, 44 ; 143 ; 243, 244), et dans lequel le dispositif de dispositif de sélection (30, 31, 33 ; 130, 131, 133 ; 230, 231, 233) comprend des moyens de réglage (33 ; 133 ; 233) qui sont agencés entre ledit au moins un amplificateur (60, 61, 62 ; 160 ; 260, 261) et les convertisseurs analogiques-numériques (51, 52).

3. Capteur d'images selon la revendication 1 ou 2, dans lequel pour ledit au moins un signal d'un pixel (2) respectif, la génération de signaux différemment amplifiés a lieu au moins partiellement dans des canaux (20, 21, 22 ; 220, 221) séparés les uns des autres avec un amplificateur (60, 61, 62; 260, 261) respectif, ladite au moins une sortie (43, 44) comprenant un nombre de sorties de canal (43, 44) correspondant au nombre des facteurs d'amplification sélectionnés.

4. Capteur d'images selon la revendication 3, dans lequel le circuit de lecture (4) est conçu de telle sorte que le signal amplifié d'au moins l'un des canaux (21) est toujours émis à une des sorties de canal (44) en tant que l'un des signaux de sortie.

5. Capteur d'images selon la revendication 3 ou 4, dans lequel les canaux (20, 21, 22 ; 220, 221) possèdent des sensibilités différentes.

6. Capteur d'images selon au moins l'une des revendications précédentes, dans lequel pour ledit au moins un signal d'un pixel (2) respectif, la génération des signaux différemment amplifiés a lieu au moins partiellement successivement.

7. Capteur d'images selon au moins l'une des revendications précédentes, dans lequel pour ledit au moins un signal d'un pixel (2) respectif, la génération des signaux différemment amplifiés a lieu au moins partiellement dans un canal (120) commun avec un amplificateur (160) commun dudit au moins un amplificateur, le facteur d'amplification de l'amplificateur (160) commun étant réglable.

8. Capteur d'images selon au moins l'une des revendications précédentes, dans lequel le circuit de lecture (4) est conçu de telle sorte que pour ledit au moins un signal d'un pixel (2) respectif, la génération des signaux différemment amplifiés a lieu seulement pour une partie des facteurs d'amplification sélectionnables.

9. Capteur d'images selon au moins l'une des revendications précédentes, dans lequel le dispositif de sélection (30, 31, 33 ; 130, 131, 133 ; 230, 231, 233) est conçu pour effectuer la sélection en fonction d'au moins une comparaison entre au moins une valeur de référence (30 ; 130 ; 230) et la hauteur dudit au moins un signal d'un pixel (2) respectif.

10. Capteur d'images selon au moins l'une des revendications précédentes, dans lequel le circuit de lecture (4) est conçu pour sélectionner exactement deux facteurs d'amplification pour ledit au moins un signal d'un pixel (2) respectif.

11. Capteur d'images selon la revendication 10, dans lequel exactement trois facteurs d'amplification peuvent être sélectionnés, à savoir un facteur d'amplification avec une faible amplification, un facteur d'amplification avec une amplification moyenne et un facteur d'amplification avec une amplification élevée.

12. Capteur d'images selon la revendication 11, dans lequel le circuit e lecture (4) est conçu de telle sorte que le facteur d'amplification avec l'amplification moyenne est toujours sélectionné, et en ce que l'on détermine lequel des deux autres facteurs d'amplification est additionnellement sélectionné.

13. Capteur d'images selon au moins l'une des revendications précédentes, dans lequel le circuit de lecture (4) pour ledit au moins un signal d'un pixel (2) respectif comprend au moins une sortie (45) additionnelle, et dans lequel le résultat de la sélection respective pour ledit au moins un signal d'un pixel (2) respectif peut être émis à ladite au moins une sortie (45) additionnelle.

14. Capteur d'images selon au moins l'une des revendications précédentes, dans lequel le dispositif de sélection (30, 31, 33 ; 130, 131, 133 ; 230, 231, 233) est conçu de telle sorte que les signaux de sortie possèdent des facteurs d'amplification qui se succèdent directement dans une série formée en ordre croissant à partir des facteurs d'amplification sélectionnables.

15. Procédé pour lire un capteur d'images pour caméras électroniques, dans lequel le capteur d'images (1) comporte une multitude de pixels (2) photosensibles pour engendrer au moins un signal proportionnel à l'exposition, les pixels (2) étant couplés à un circuit de lecture (4) présentant au moins un amplificateur (60, 61, 62 ; 160), ledit au moins un signal d'un pixel (2) respectif étant amplifié avec différents facteurs d'amplification pour engendrer pour ledit au moins signal d'un pixel (2) respectif des signaux différemment amplifiés, dans lequel le circuit de lecture (4) présente au moins une sortie (43, 44 ; 143) à laquelle au moins quelques uns des signaux différemment amplifiés sont émis en tant que signaux de sortie, au moins trois différents facteurs d'amplification pouvant être sélectionnés pour ledit au moins un signal d'un pixel (2) respectif,
**caractérisé en ce qu'**on sélectionne, en fonction de la hauteur dudit au moins un signal d'un pixel (2) respectif, la composition d'un groupe de facteurs d'amplification directement successifs, avec lesquels les signaux de sortie du circuit de lecture (4) sont amplifiés, le nombre des facteurs d'amplification du groupe correspondant au nombre des signaux de sortie, le nombre des signaux de sortie pour ledit au moins un signal d'un pixel (2) respectif étant d'au moins deux et inférieur au nombre des facteurs d'amplification sélectionnables.
